# EUROPÄISCHE PATENTANMELDUNG

(11) **EP 4 321 749 A1**
(43) Veröffentlichungstag der Anmeldung: **14.02.2024**
(21) Anmeldenummer: 22190300.8
(22) Anmeldetag: 12.08.2022
(51) Int. Cl.: F03D 13/20

(54) **WINDENERGIEANLAGE UND DAZUGEHÖRIGER VORTEX-GENERATOR**

(71) Anmelder: Wobben Properties GmbH, 26607 Aurich (DE)
(72) Erfinder: Arnold, Matthias, 26603 Aurich (DE)
(74) Vertreter: Eisenführ Speiser

(57) **Zusammenfassung**

Die vorliegende Erfindung betrifft eine Windenergieanlage (100) mit einem Turm (102), einer auf dem Turm (102) angeordneten Gondel (104), einem Generator und einem Rotor (106) mit mindestens einem Rotorblatt (108), wobei die Windenergieanlage (100) Vortex-Generatoren (200) aufweist, die an einer Außenfläche des Turms (102) angeordnet sind, wobei die Vortex-Generatoren (200) einen sich von der Außenfläche des Turms (102) erstreckenden Flügel (230) aufweisen, und wobei der Flügel (230) eine sich senkrecht von der Fläche des Turms (102) erstreckende Höhe und eine parallel zu der Fläche des Turms (102) erstreckende Sehne aufweist. Die Sehne weist eine Krümmung auf, derart, dass ein erstes Ende (232) der Sehne einen geringeren Winkel zur Horizontalen aufweist als das gegenüberliegende zweite Ende (234) der Sehne.

## Beschreibung

Die vorliegende Erfindung betrifft eine Windenergieanlage mit einem Turm, einer auf dem Turm angeordneten Gondel, einem Generator und einem Rotor mit mindestens einem Rotorblatt, wobei die Windenergieanlage Vortex-Generatoren aufweist, die an einer Außenfläche des Turms angeordnet sind, wobei die Vortex-Generatoren einen sich von der Außenfläche des Turms erstreckenden Flügel aufweisen, wobei der Flügel eine sich senkrecht von der Fläche des Turms erstreckende Höhe und eine parallel zu der Fläche des Turms erstreckende Sehne aufweist. Die Erfindung betrifft ebenfalls einen zugehörigen Vortex-Generator und ein zugehöriges Verfahren. Insbesondere betrifft die Erfindung die Anordnung der Vortex-Generatoren.

Windenergieanlagen, insbesondere Horizontalachsen-Windenergieanlagen, sind weit bekannt und dienen der Erzeugung elektrischer Energie aus Wind. Durch periodische Wirbelablösung an einem Turm der Windenergieanlagekommt es zu einer Anregung des Turms. Fällt diese abhängig von der Windgeschwindigkeit mit einer Eigenfrequenz der Turmstruktur zusammen, kann es zu Vortex-induced-Vibrations (ViV) / wirbelerregten Querschwingungen kommen. Diese stellen ein Hindernis für die weitere Errichtung des Turms, sowie ein strukturelles und Arbeitssicherheits-Risiko dar.

Zur Lösung der ViV-Problematik ist vorgeschlagen, temporär angebrachte "Scruton-Wendeln" zu verwenden. Hierbei handelt es sich um helixförmige, um den Turm angebrachte Störkörper (z.B. Drainage-Rohre, Schaumstoffkörper, Schläuche). Diese Lösung erfordert jedoch einen relativ hohen Zeitaufwand zur Anbringung und wird aufgrund des erforderlichen Entfernens nach dem Aufbau üblicherweise nur für die oberste Turmsektion eingesetzt werden.

Aus EP 3 565 967 A1 ist beispielsweise bekannt, dass ein Turm einer Windenergieanlage eine Außenfläche aufweist, wobei ein Wirbelgenerator mit der Außenfläche des Bauwerks verbunden ist, der so ausgelegt und angeordnet ist, dass er in einem an der Außenfläche vorbeiströmenden Luftstrom Wirbel erzeugt.

Die darin vorgeschlagene großflächige Belegung der Oberfläche mit Vortex-Generatoren hat sich jedoch als sehr aufwändig und damit kostenintensiv herausgestellt.

Alternative Lösungen zur Bekämpfung der Vortex-induced-Vibrations sind beispielsweise aus EP 3 604 715 A1 bekannt.

Vor diesem Hintergrund war es eine Aufgabe der vorliegenden Erfindung, die Windenergieanlage, insbesondere die daran angeordneten Vortex-Generatoren, derart zu verbessern, dass die Lösung der ViV Problematik verbessert ist, insbesondere mit geringerem Aufwand und/oder einem erheblich reduzierten Umfang von Vortex-Generatoren und somit geringeren Kosten gelöst wird.

Erfindungsgemäß wird die Aufgabe in einem Aspekt bei der eingangs beschriebenen Windenergieanlage dadurch gelöst, dass die Sehne des Vortex-Generators eine Krümmung aufweist, derart, dass ein erstes Ende der Sehne einen geringeren Winkel zur Horizontalen aufweist als das gegenüberliegende zweite Ende der Sehne.

Die Vortex Generatoren sind dabei so geformt, dass sie bei einer nominellen Anströmung ein starkes Wirbelpaar erzeugen, während sie bei rückwärtiger Anströmung kein bzw. ein schwaches Wirbelpaar erzeugen. Dies ist gerade der Effekt der erfindungsgemäßen Krümmung der Sehne des Vortex-Generators. Hierbei ist die nominelle Anströmung insbesondere die Richtung von dem ersten Ende der Sehne zu dem zweiten Ende der Sehne, wobei die rückwärtige Anströmung von dem zweiten Ende hin zum ersten Ende gerichtet ist.

Hierbei wird ausgenutzt, dass die an dem Turm vorbeiströmende Luftströmung überwiegend horizontal orientiert ist. Selbstverständlich kann es es auch vertikale Komponenten dieser Luftströmung geben, die jedoch den erfindungsgemäßen Effekt, nämlich die unsymmetrisch starke Erzeugung von Wirbelpaaren nicht beeinträchtigen. Die Erzeugung eines starken und schwachen Wirbelpaares entsteht durch die unterschiedlichen Winkel zur Horizontalen, da nämlich die Erhöhung des Winkels über die Sehne, d.h. in Richtung der nominellen Anströmung, die Luftströmung aus der Horizontalen ablenkt und damit einen starken Wirbel verursacht, während die Gegenrichtung diesen Effekt nicht zeigt, so dass der entstehende Wirbel schwächer ist.

Die Wirksamkeit der erfindungsgemäßen Vortex-Generatoren kann über einen Güteparameter angegeben werden, der die maximale Wirbelstärke im Nachlauf des Vortex-Generatores bei nomineller Anströmung ins Verhältnis setzt zu der maximalen Wirbelstärke im Nachlauf des Vortex-Generators bei umgekehrter also rückwärtiger Anströmung. Vorzugsweise ist der Güteparameter wenigstens 1,5, besonders bevorzugt wenigestens 2. Die maximale Wirbelstärke wird in der Literatur auch als Vorticity angegeben.

Im Gegensatz zu einem Knick in dem Verlauf der Sehne hat eine Krümmung den Effekt, dass die Luftströmung keine Unstetigkeitsstellen erfährt, die aus mehreren Gründen von Nachteil sind. Gleichzeitig kann aber der Winkel, unter dem die Luft auf die Sehne trifft, durch die unterschiedlichen Winkel zur Horizontalen bei nomineller und rückwärtiger Anströmung unterschiedlich sein, was den erfindungsgemäß vorteilhaften Effekt bewirkt.

Bevorzugt beträgt der Unterschied zwischen dem Winkel des ersten Endes zur Horizontalen und dem Winkel des zweiten Endes zur Horizontalen wenigstens 5°, besonders bevorzugt wenigstens 10°. Ebenso ist bevorzugt dass der Unterschied zwischen den Winkeln höchstens 60° und besonders bevorzugt höchstens 45° beträgt.

Vorzugsweise ist die Krümmung der Sehne über ihren ganzen Verlauf ungleich 0. Dadurch ergibt sich eine besonders vorteilhafte Asymetrie der erzeugten Wirbel in Abhängigkeit der Anströmungsrichtung. Die Krümmung kann über die gesamte Lehne konstant sein. Die Krümmung kann aber auch unterschiedlich sein, zum Beispiel nahe eines oder beider der Enden größer als in einem mittleren Bereich sein.

Vorzugsweise erstrecken sich die Flügel sich mit einem Winkel von mindestens 80°, vorzugsweise mindestens 85°, besonders bevorzugt von mindestens 88°, zu der Außenfläche. Es hat sich herausgestellt, dass insbesondere fertigungstechnisch die Erstreckung senkrecht zur Außenfläche vorteilhaft sind. Dies ermöglicht eine besonders einfache Entformbarkeit, beispielsweise wenn die Vortex-Generatoren in einem Spritzgussverfahren hergestellt sind. Aerodynamisch sind auch Abweichungen von der senkrechten Erstreckung ohne Nachteile möglich.

Vorzugsweise weisen Flügel jedes der Vortex-Generatoren eine Höhe von zwischen 0,5% und 5%, vorzugsweise zwischen 1% und 2,5% und besonders bevorzugt von etwa 1,5%, des Durchmessers des Turms an dem Ort des Vortex-Generators auf.

Beispielsweise hat sich herausgestellt, dass eine Höhe der Flügel von etwa 64 mm bei einem Turm, der dort einen Durchmesser von 4 m aufweist, ideal ist. Der Turmdurchmesser über die Höhe ist üblicherweise nicht konstant, wobei bevorzugt ist, dass zumindest über einen gewissen Höhenbereich des Turms die gleichen Vortex-Generatoren angebracht sind, da dies fertigungstechnische Vereinfachungen mit sich bringt. In diesem Zusammenhang ist mit dem Wort "etwa" vorzugsweise ein Bereich von +/- 20% um den genannten Wert, hier 1,5% bezogen auf den Durchmesser des Turms, zu verstehen.

Als Mindesthöhe der Flügel haben sich 32 mm bewiesen. Die 32 mm haben sich insbesondere für einen Turm mit Durchmesser 4 m als vorteilhafte Mindesthöhe ergeben.

In einer Ausführung sind mehrere Vortex-Generatoren, vorzugsweise eine durch vier teilbare Zahl von Vortex-Generatoren größer als sechs und insbesondere acht Vortex-Generatoren, ringförmig in einer Ebene um den Turm angeordnet. Ein Vielfaches von vier hat den besonderen Vorteil, dass dadurch die Vortex-Generatoren im Transport des üblicherweise runden Turmsegments die maximale Höhe und maximale Breite des Transports nicht verletzen. Während des Transports ist dann die Positionierung der Vortex-Generatoren schräg oben bzw. unten.

Unter einer Ebene ist in diesem Zusammenhang eine Art Stufe in Höhenrichtung des Turms zu verstehen und wird insbesondere zur Unterscheidung von helixförmigen Anordnungen herangezogen. Es hat sich nämlich herausgestellt, dass die Anordnung im Wesentlichen in Ringform gegenüber der Helixanordnung von Vorteil ist.

Eine Ebene ist demnach ein Höhenbereich oder eine Höhenstufe, entlang der sich die Vortex-Generatoren ringförmig um den Turm anordnen. Hierbei können alle Vortex-Generatoren auf exakt der gleichen Höhenposition liegen, oder alternativ auch in Form einer Zickzack-Kurve alternierend innerhalb des Rings versetzt sein. Beispielsweise kann je ein Vortex-Generator nach oben und der benachbarte nach unten versetzt sein. Eine derartige alternierende Anordnung innerhalb eines Rings hat sich als besonders vorteilhaft gezeigt.

Vorzugsweise sind die Vortexgeneratoren in einer Ebene gleichmäßig voneinander beabstandet.

Vorzugsweise sind mehrere Ebenen oder Ringe von Vortex-Generatoren entlang der Höhenrichtung des Turms angeordnet. Beispielsweise sind zwei, drei, vier oder mehr als vier Ebenen oder Ringe von Vortex-Generatoren angeordnet. Die Ebenen bzw. Ringe können jeweils die gleiche Zahl an Vortex-Generatoren haben, sie können aber auch unterschiedliche Anzahlen an Vortex-Generatoren haben. Auch können die Vortex-Generatoren der unterschiedlichen Ebenen bzw. Ringe an gleicher Position in Umlaufrichtung oder versetzt zueinander in Umlaufrichtung angeordnet sein.

In einer bevorzugten Ausführung weisen die mehreren Ebenen voneinander einen Abstand in vertikaler Richtung auf, der zwischen dem einfachen und dem dreifachen des Turmdurchmessers, vorzugsweise etwa dem zweifachen des Turmdurchmessers, beträgt.

Der Abstand zwischen dem einfachen und dem dreifachen des Turmdurchmessers ist hierbei der vorteilhafte Kompromiss zwischen Wirksamkeit und Komplexität, wobei eine höhere Anzahl von Ebenen bzw. Ringen die Komplexität und den Aufwand erhöht, während eine geringere Anzahl die Wirksamkeit verschlechtert.

Vorzugsweise sind wenigstens drei Ebenen von Vortex-Generatoren entlang der Höhenrichtung des Turms angeordnet, wobei der Abstand zwischen zwei der Ebenen geringer als zwischen den weiteren der Ebenen ist. Man kann in diesem Fall auch von Mehrfachringen sprechen, die einen deutlich geringeren Abstand als zu der nächsten Ebene bzw. dem nächsten Ring aufweisen.

In einer bevorzugten Ausführung sind die Krümmungen der Sehnen sämtlicher der Vortex-Generatoren einer Ebene gleich orientiert. Anders ausgedrückt ist die Orientierung der einzelnen Vortex-Generatoren in Umlaufrichtung in dieser bevorzugten Ausgestaltung gleich. In diesem Fall wird demnach immer ein Teil der Ebene bzw. des Rings von Vortex-Generatoren in nomineller Richtung angeströmt, während ein andere Teil der Ebene rückwärtig angeströmt wird.

Es gibt demnach ein permanenten Unterschied zwischen starken Wirbeln, nämlich auf der in nomineller Richtung angeströmten Seite und schwächeren Wirbeln, nämlich auf der in rückwärtiger Richtung angeströmten Seite der Ebene bzw. des Rings von Vortex-Generatoren.

In einer bevorzugten Ausgestaltunge sind die Krümmungen der Sehnen wenigstens zwei benachbarter Ebenen, vorzugsweise sämtlicher der benachbarten Ebenen, entgegengesetzt orientiert.

Damit ergibt sich die Situation, dass zwei in vertikaler Richtung benachbarte Ebenen bzw. Ringe von Vortex-Generatoren nicht gleichzeitig in nomineller bzw. in rückwärtiger Richtung angeströmt werden. Wenn ein bestimmter Teil in Umfangsrichtung einer ersten Ebene in nomineller Richtung angeströmt wird, und die benachbarten Ebenen entgegengesetzt gekrümmt sind, dann werden die benachbarten Ebenen gerade rückwärtig angeströmt. Dadurch ergibt sich ein vorteilhafter Unterschied der erzeugten Wirbel zwischen den in vertikaler Richtung benachbarten Ebenen. Auf der gegenüberliegenden Turmseite wird entsprechend die erste Ebene rückwärtig angeströmt, während die benachbarten Ebenen dann nominell angeströmt werden.

In einer bevorzugten Ausgestaltung weist die Sehne eine Krümmung auf, derart, dass der Vortex-Generator eine Ablenkung der die Fläche des Turms passierenden Strömung in Turmquerrichtung ermöglicht. Hierbei handelt es sich um einen vorteilhaften Sekundäreffekt der erfindungsgemäßen Anordnung von Vortex-Generatoren.

In einer bevorzugten Ausführung weisen die Vortex-Generatoren jeweils zwei Flügel mit dazwischen angeordneter Basis auf.

Die Vortex-Generatoren sind also als Vortex-Generatorpaar ausgebildet. Die dazwischenliegende Basis ermöglicht, dass die Vortex-Generatoren mit geringem Aufwand an der Windenergieanlage montierbar sind. Zudem wird die Stabilität der Anbringung der Vortex-Generatoren an dem Turm der Windenergieanlage erhöht.

Wenigstens einer der beiden Flügel weist die gekrümmte Sehne auf, wobei auch beide der Flügel entsprechend gekrümmte Sehnen aufweisen können.

Vorzugsweise ist der Abstand zwischen den Flügeln etwa gleich der Höhe der Flügel, wobei hier beispielsweise jeweils der größte Abstand bzw. die größte Höhe herangezogen wird.

In einer bevorzugten Ausgestaltung weisen die beiden Flügel des Vortex-Generators entgegengesetzte Krümmungen auf, so dass Tangenten durch die ersten Enden der zwei Flügel sich nicht oder unter einem kleineren Winkel schneiden als Tangenten durch die gegenüberliegenden zweiten Enden der zwei Flügel.

Das bedeutet insbesondere, dass die beiden Flügel an den ersten Enden näherungsweise parallel sind, während sich die Flügel an den zweiten Enden einander annähern bzw. voneinander entfernen. Als besonders vorteilhaft hat sich herausgestellt, die Vortex-Generatoren derart auszuführen, dass die beiden Flügel an den zweiten Enden aufeinander zulaufen.

Vorzugsweise sind die Vortex-Generatoren derart an der Außenfläche des Turms montiert, dass eine Mittellinie zwischen den beiden Flügeln im Wesentlichen horizontal verläuft.

Damit kann für die meisten vorherrschenden Windbedingungen, insbesondere solche ohne signifikante vertikale Komponenten, ein maximaler Unterschied zwischen nomineller Anströmung und umgekehrter bzw. rückwärtiger Anströmung des Paars von Flügeln eines Vortex-Generators ermöglicht werden. Mit dem Begriff "im Wesentlichen" ist hier vorzugsweise eine fertigungstechnische Toleranz, beispielsweise im Bereich von 10°, bevorzugt von 5°, eingeschlossen.

Vorzugsweise verläuft die Mittellinie für alle Vortex-Generatoren sämtlicher Ebenen von Vortex-Generatoren im Wesentlichen horizontal, wobei die Orientierung der Vortex-Generatoren bei benachbarten Ebenen bevorzugt entgegengesetzt verläuft.

In einer bevorzugten Ausführung ist eine vordere Hältfte entlang der Sehne einer lateralen Fläche der Flügel ausgehend von dem ersten Ende kleiner als eine hintere Hälfte der Fläche, dabei insbesondere mindestens 50% und besonders bevorzugt mindestens 75% der hinteren Sehnenhälfte der Fläche ist.

Diese Ausführung spezifiziert also die laterale Fläche der Flügel der Vortex-Generatoren, die nämlich in Längsrichtung der Sehne nicht symmetrisch sondern unsymmetrisch ausgeführt sein soll. Hierbei soll die vordere Hälfte in Sehnenrichtung kleiner sein als die hintere Hälfte, wobei als "vorne" hier das erste Ende bezeichnet wird. Es hat sich herausgestellt, dass eine derartige Geometrie ein besonders gutes Ungleichgewicht zwischen Wirbelstärken bei nomineller und umgekehrter Anströmung ermöglicht.

Vorzugsweise weist die Basis höchstens 90% der Fläche zwischen den Sehnen der Flügel aufweist, wobei die Basis insbesondere "U", "V", "W" oder "H"-förmig ausgebildet ist. Eine derartige Basis ermöglicht Stabilität gegen Ablösen, spart Material und bewirkt durch die Kanten der Basis, die nicht senkrecht auf der Strömungsrichtung liegen, einen zusätzlichen aerodynamischen Effekt.

Vorzugsweise sind die Vortex-Generatoren derart angeordnet, dass die Strömungsablenkung im Wesentlichen windrichtungsunabhängig erfolgt. Damit kann der vorteilhafte Effekt der Vermeidung von ViV unabhängig von der Windrichtung und zu allen Betriebsbedingungen erreicht werden. Dies kann beispielsweise durch die gleichgerichteten Vortex-Generatoren je Ebene erreicht werden.

In einem weiteren Aspekt betrifft die Erfindung einen Vortex-Generator zur Verwendung in einer Windenergieanlage, beispielsweise einer Windenergieanlage gemäß einem Aspekt der vorliegenden Offenbarung.

In einem weiteren Aspekt betrifft die Erfindung ein Verfahren zum Nachrüsten von Vortex-Generatoren gemäß einem Aspekt der Erfindung einer Windenergieanlage nach einem Aspekt der Erfindung.

Weitere Vorteile und bevorzugte Ausgestaltungen werden nachfolgend mit Verweis auf die beigefügten Figuren weiter beschrieben. Hierbei zeigen:
- Fig. 1: schematisch und exemplarisch eine Windenergieanlage;
- Fig. 2: schematisch und exemplarisch die Anordnung von Vortex-Generatoren an einem Turm der Windenergieanlage;
- Fig. 3: schematisch und exemplarisch weitere Details der Vortex-Generatoren;
- Fig. 4: schematisch und exemplarisch einen Effekt der erfindungsgemäßen Anordnung von Vortex-Generatoren;
- Fig. 5: schematisch und exemplarisch einen weiteren Effekt der erfindungsgemäßen Anordnung von Vortex-Generatoren;
- Fig. 6: schematisch und exemplarisch Strömungsdarstellungen bei erfindungsgemäßen Vortex-Generatoren;
- Fig. 7: schematisch und exemplarisch Strömungsdarstellungen bei erfindungsgemäßen Vortex-Generatoren;
- Fig. 8: schematisch und exemplarisch einen Vortex-Generator mit Basis in Seitenansicht;
- Fig. 9: schematisch und exemplarisch einen Vortex-Generator mit Basis in Frontansicht; und
- Fig. 10: schematisch und exemplarisch Vortex-Generatoren mit verschiedener Basis in Draufsicht.

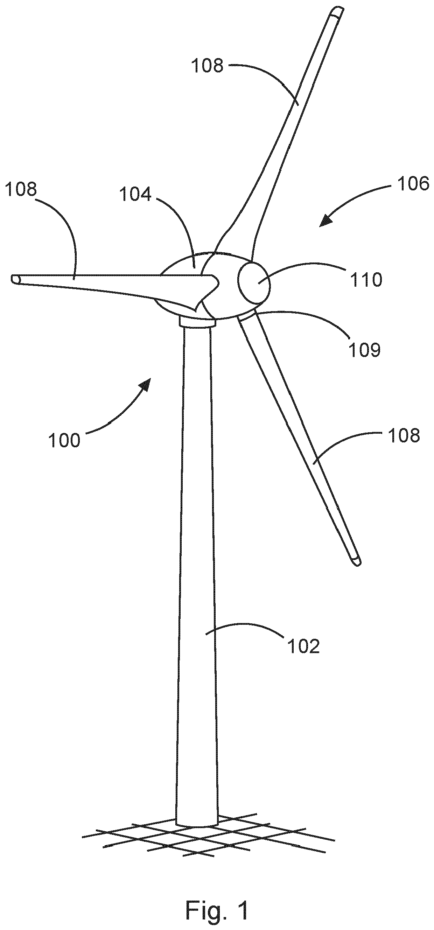

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

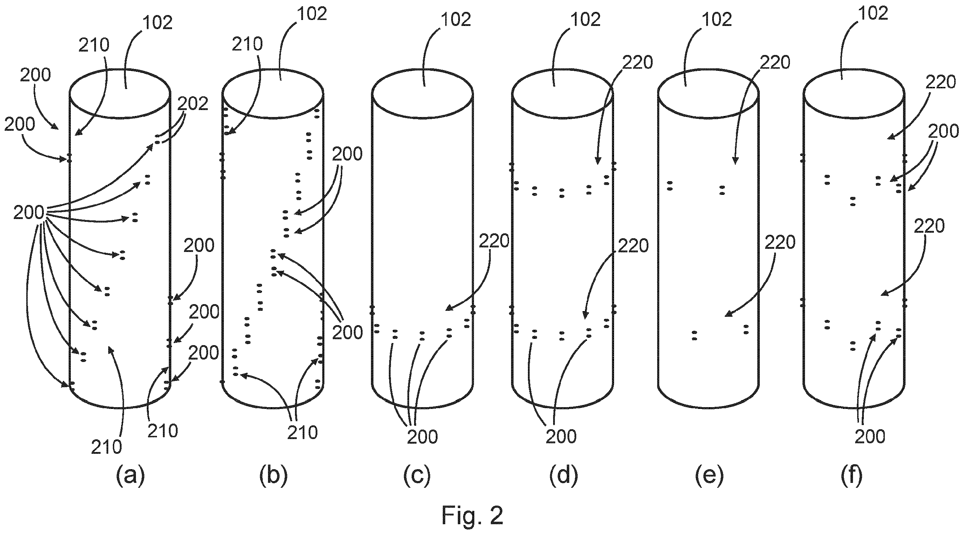

Fig. 2 zeigt verschiedene Anordnung von Vortex-Generatoren 200 auf der Außenseite des Turms 102 der Windenergieanlage 100. In Fig. 2 ist jeweils nur ein Teil der jeweiligen Türme 102 in vertikaler Richtung gezeigt, vertikal kann sich der Turm 102 also sowohl an dem unteren Ende als auch an dem oberen Ende weiter erstrecken.

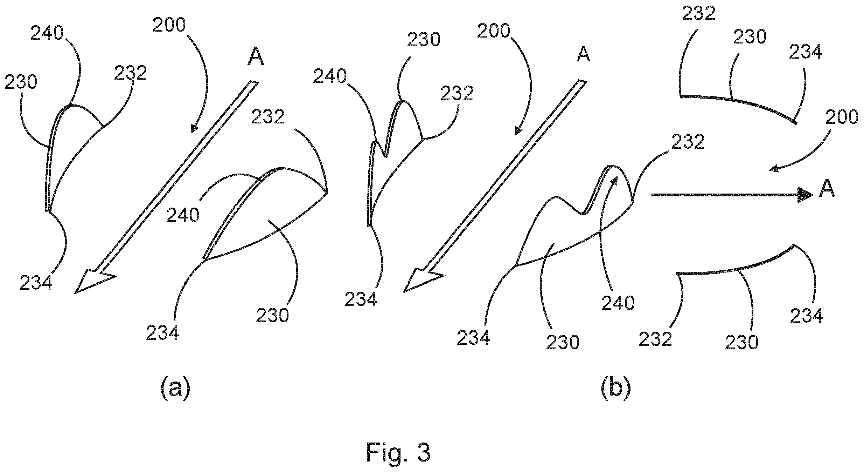

Die Vortex-Generatoren 200 weisen jeweils zwei paarweise entgegengesetzt gekrümmte Flügel 202 auf und werden mit Verweis beispielsweise auf die Fig. 3 im Detail beschrieben. Damit ergibt sich für den Vortex-Generator 200 eine nominelle Anströmrichtung und eine umgekehrte oder rückwärtige Anströmrichtung, wobei die Vortex-Generatoren 200 derart an dem Turm 102 angeordnet sind, dass sowohl die nominelle Anströmrichtung als auch die um 180° gedrehte rückwärtige Anströmrichtung im Wesentlichen in der Horizontalen verlaufen.

Fig. 2(a) zeigt eine helixförmige Anordnung von Vortex-Generatoren 200 an dem Turm 102. Je ein Vortex-Generator 200 ist je Stufe in Umlaufrichtung gezeigt.

Während in dem Beispiel eine rechtsgängige Helix mit drei Helixsträngen 210 gezeigt ist, sind natürlich ebenso linksgängige Helizes möglich. Auch sind obwohl eine Dreifach-Helix gezeigt ist, natürlich ebenso mehr und weniger Helixstränge vorstellbar.

Fig. 2(b) zeigt ebenfalls eine helixförmige Anordnung von Vortex-Generatoren 200, wobei jeweils zwei Vortex-Generatoren 200 an einer Position in Umlaufrichtung vertikal übereinander angeordnet sind.

In Fig. 2(a) und Fig. 2(b) können in einem Helixstrang angeordnete, vertikal benachbarte Vortex-Generatoren 200 entweder die gleiche oder eine entgegengesetzte Orientierung aufweisen, wobei die gleiche Orientierung aller Vortex-Generatoren 200 in einem Helixstrang bevorzugt ist.

Fig. 2(c) zeigt eine umlaufende Ebene 220 bzw. Ring von Vortex-Generatoren 200. In diesem Beispiel können die horizontal benachbart angeordneten Vortex-Generatoren 200 gleich oder entgegengesetzt orientiert angeordnet sein.

Bevorzugt ist, dass vertikal benachbart angeordnete Vortex-Generatoren 200 unterschiedlich und horizontal benachbart angeordneten Vortex-Generatoren 200 gleich sind.

Fig. 2(d) zeigt zwei Ebenen 220, wobei die Vortex-Generatoren 200 der unteren Ebene an der gleichen Position in Umlaufrichtung wie die Vortex-Generatoren 200 der oberen Ebene angeordnet sind. Natürlich sind auch mehr als zwei Ebenen 220 vorstellbar. Auch die vertikale benachbarten Vortex-Generatoren 200 der unterschiedlichen Ebenen können gleich oder entgegengesetzt orientiert angeordnet sein. Die Abstände der Ebenen zueinander können variieren und z.B. über einen großen und einen oder mehr kleine Abstand jeweils einen Doppel- oder Mehrfachring bilden.

Fig. 2(e) zeigt ein weiteres Beispiel mit zwei Ebenen 220, wobei die Belegungszahl mit Vortex-Generatoren 200 je Ebene 220 geringer ist als in dem Beispiel der Fig. 2(d). Zudem sind die Vortex-Generatoren 200 der unterschiedlichen Ebenen jeweils auf Versatz in Umlaufrichtung angeordnet. Auch eine Belegung mit mehr oder weniger als den gezeigten Vortex-Generatoren 200 ist je Ebene 220 möglich.

Fig. 2(f) zeigt schließlich ein Beispiel, bei dem horizontal benachbarte Vortex-Generatoren 200 bezüglich der Ebene 220 alternierend nach oben und unten versetzt angeordnet sind. Die Vortex-Generatoren 200 verlaufen auch hier ringförmig um den Turm 102, die vertikale Position der jeweiligen Vortex-Generatoren 200 ist aber nicht identisch sondern alterniert in Art einer Sinusform.

Fig. 3 zeigt weitere Details der Vortex-Generatoren 200. Die Vortex-Generatoren 200 sind so geformt, dass sie bei einer nominellen Anströmung A ein starkes Wirbelpaar erzeugen, während sie bei rückwärtiger Anströmung (nicht gezeigt, entgegengesetzt zu der Anströmung A) kein bzw. ein schwaches Wirbelpaar erzeugen.

Dies wird durch eine Wölbung eines Flügels 230 des Vortex-Generators 200 erreicht. In dem gezeigten Beispiel weisen zwei an einem Vortex-Generator 200 paarweise ausgebildete Flügel 230 eine entgegengesetzt ausgerichtete Wölbung auf. Die jeweiligen Flügel 230 weisen eine Sehne, genannt Flügelsehne, auf, die sich von einem ersten Ende 232 bis zu einem zweiten Ende 234 erstrecken. Die nominelle Anströmung erfolgt von dem ersten Ende 232 hin zu dem zweiten Ende 234, wobei die rückwärtige Anströmung in genau entgegengesetzter Richtung von dem zweiten Ende 234 zu dem ersten Ende 232 erfolgt.

Die Sehne des Flügels 230 ist gekrümmt, so dass ein gewölbtes Profil resultiert. Das erste Ende 232 hat einen geringeren Winkel zu der Anströmungsrichtung als das zweite Ende 234, wobei die beiden Flügel 230 des Vortex-Generators 200 in dem in Fig. 3 gezeigten Beispiel von den ersten Enden 232 zu den zweiten Enden 234 aufeinander zulaufen.

In Seitenansicht sind die Flügel 230 vorzugsweise nicht wie klassische Vortex-Generatoren rechteckig oder dreieckig, sondern weisen eine abgerundete Kontur mit einer, vgl. Fig. 3(a), oder mehreren, vgl. Fig. 3(b), abgerundeten Spitzen 240 auf. Besonders stark ausgeprägt ist die Asymmetrie zwischen erzeugten Wirbelpaaren bei nomineller und entgegengesetzter Anströmung bei der Ausformung mit mehreren Spitzen (vgl. Kamelhöcker).

Die Belegung des Turms 102 mit Vortex-Generatoren 200 orientiert sich dabei an den Bereich größter Amplitude für die jeweilige Eigenschwingungsform. Für die 1. Mode entsprechend ca. das oberste 1/3 des Turms, für die 2. Mode im Bereich der halben Turmhöhe.

Mit einer aufwändigen fast vollflächigen Belegung des Turms mit Vortex-Generatoren wird erreicht, dass die Nachlaufbreite des Turms beidseitig reduziert wird und sich dadurch keine ausgeprägte Wirbelinstabilität und entsprechende Anregung des Turms ergibt. Im Gegensatz hierzu beeinflusst die vorliegende Erfindung den Nachlauf des Turms nur in einzelnen Höhen bzw. Abschnitten halbseitig.

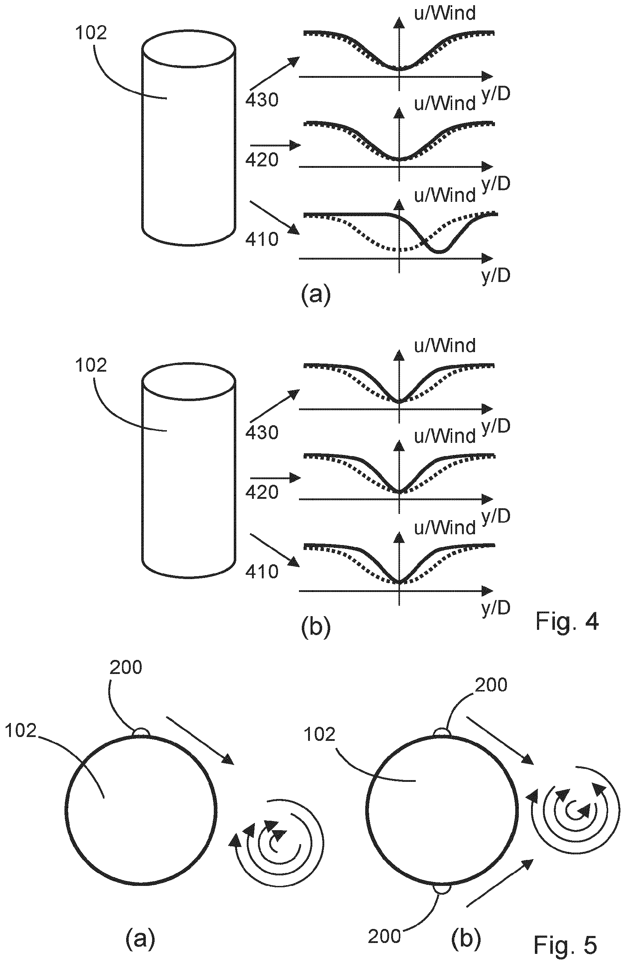

Hierdurch treten zwei vorteilhafte Effekte auf, die mit Verweis auf Fig. 4 beschrieben werden. Fig. 4 zeigt einen Vergleich der vorliegenden Erfindung in Fig. 4(a) sowie der bekannten vollflächigen Belegung des Turms 102 mit Vortex-Generatoren in Fig. 4(b). Die Figur zeigt den Einfluss der Vortex-Generatoren 200 auf die Umströmung in unterschiedlichen Turmhöhen. In Fig. 4(a) ist lediglich eine Reihe von Vortex-Generatoren 200 mit Wölbung im unteren Bereich 410 gezeigt, während in Fig. 4(b) Vortex-Generatoren 200 ohne Wölbung im unteren Bereich 410, im mittleren Bereich 420 und im oberen Bereich 430 ausgebildet sind.

Die gestrichelten Linien zeigen die Turmumströmung bei einem blanken Zylinder, als welcher der Turm 102 hier zur Vereinfachung angenähert wird, während die durchgezogenen Linien den Verlauf mit der beschriebenen Anordnung von Vortex-Generatoren zeigt.

Erfindungsgemäß wird zum einen der Nachlauf in den beeinflussten Bereichen, hier dem unteren Bereich 410, durch die Asymmetrie der Turmumströmung seitlich abgelenkt, so dass die Nachlaufbereiche entlang des Turms 102 voneinander abgespalten werden und sich entlang des Turms keine synchrone Ablösung ergeben kann. Dies kann darin gesehen werden, dass die durchgezogene Linie in dem Bereich 410 in Fig. 4(a) nicht symmetrisch zur Mitte ist. Hierdurch wird es ermöglicht, den Abstand zwischen zwei mit Vortex-Generatoren belegten Bereichen in vertikaler Richtung bis in den Bereich der Stallcluster-Größe zu erhöhen. Dies entspricht dem physikalischen Effekt der "Dog-Tooth" Geometrie, die beispielsweise an Delta-Flügeln von Jets zum Einsatz kommt.

Zum anderen wird als zweiter Effekt durch die asymmetrisch starken Nachlaufwirbel der Vortex-Generatoren der zentrale Nachlaufwirbel im Nahfeld des Turms in eine Vorzugsrotationsrichtung versetzt, Fig. 5(a), während er ungestört oder bei bekannten Anordnungen in seiner Drehrichtung oszilliert, wie in Fig. 5(b) schematisch und exemplarisch gezeigt ist. Hierbei ist zu beachten, dass die asymmetrisch starken Nachlaufwirbel in Fig. 5(a) dadurch schematisch dargestellt sind, dass der Vortex-Generator 200 lediglich auf einer Seite des Turms 102 angeordnet ist. Ein eventuell vorhandener, entgegen der nominellen Anströmungsrichtung angeströmter Vortex-Generator 200 auf der gegenüberliegenden Seite ist zur Vereinfachung der Darstellung weggelassen . Dies hat zur Folge, dass mit der vorliegenden Erfindung bei einer Nachlaufinstablität, diese erst mit einem größeren Abstand zur Oberfläche eine Schwingung ausbilden kann und somit geringere Wechsellasten am Turm 102 auftreten.

Die zwei beschriebenen Effekte haben zur Folge, dass sich keine dominante Frequenz in der Wirbelstraße bilden kann und keine Resonanz zwischen Turm 102 und Strömung entsteht. Um dies zu erreichen ist es besonders effektiv, dass entlang des Turms 102 Bereiche vorliegen, die mit "aktiven" Vortex-Generatoren 200 besetzt sind und Bereiche in denen dies nicht der Fall ist. Als "aktiv" werden Vortex-Generatoren 200 bezeichnet, die in der nominellen Anströmungsrichtung angeströmt werden, während solche, die in entgegengesetzter Richtung angeströmt werden nicht "aktiv" sind. Insbesondere dürfen dabei auch auf gleicher Höhe entlang des Turms nur auf einer der beiden Seiten "aktive" Vortex-Generatoren 200 vorliegen.

Eine helixförmige Anordnung macht sich hierbei zu Nutze, dass Vortex-Generatoren 200, die sich im Bereich des Staupunkts oder der Nachlaufablösung befinden, nicht umströmt werden und somit keine entsprechenden Wirbelpaare erzeugen können. Je nach Windrichtung ist hierbei eine andere Höhe des Turms 102 beeinflusst bzw. "aktiv". Im Gegensatz dazu liegt für eine ringförmige Anordnung die beeinflusste Höhe immer auf der gleichen Position und die Zwischenhöhen sind freigelassen. In beiden Fällen ist die Anzahl von Vortex-Generatoren über dem Umfang des Turms vorzugsweise so zu wählen, dass sich immer mindestens ein Vortex-Generator 200 im relevanten "aktiven" Strömungsbereich befindet.

Weiterhin ist es für die Erfindung besonders bevorzugt, dass die Vortex-Generatoren 200 bei einer rückwärtigen Anströmung kein ausgeprägtes Wirbelpaar erzeugen. Dies wird durch eine Wölbung der Flügel erreicht, so dass die Flügel oder die Umströmung in der Draufsicht einen Teil eines liegenden U oder einer sich öffnenden Tulpe ergibt. Wird der Vortex-Generator 200 hierbei nominell auf den Hauptströmungs-parallelen Bereich angeströmt, so erzeugen die leeseitig liegend angestellten Bereiche des Vortex-Generators 200 ein Wirbelpaar. Wird der Vortex-Generator 200 hingegen rückseitig angeströmt, so erzeugen die nun luvseitig liegenden angestellten Bereiche zunächst ein Wirbelpaar, dass dann aber von dem nun leeseitig liegenden Hauptströmungs-parallelen Bereich kompensiert wird.

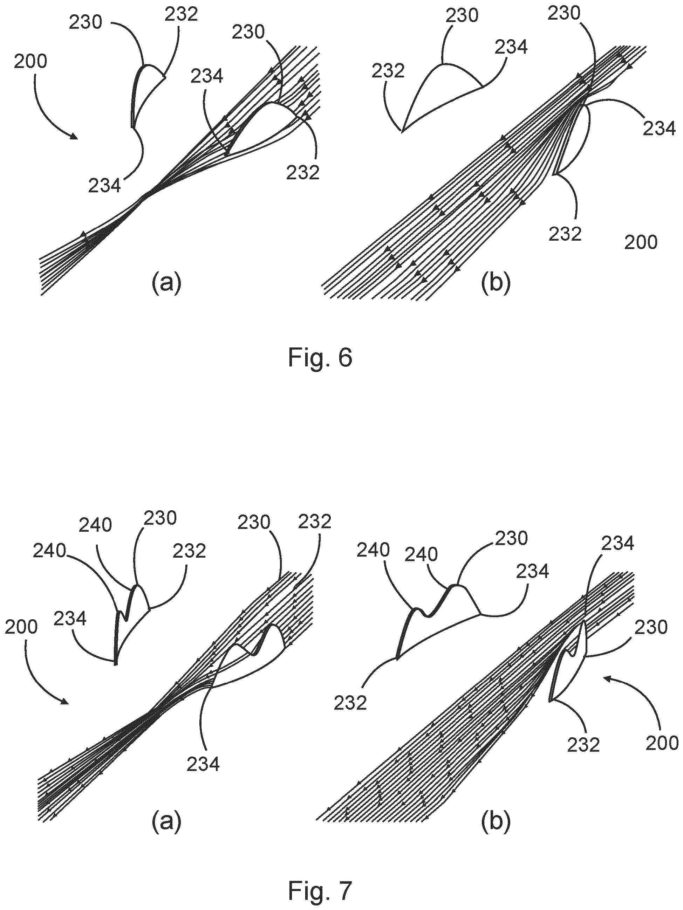

Fig. 6 zeigt schematisch und exemplarisch Stromlinien an einem gewölbten Vortex-Generator200 bei nomineller Anströmung, Fig. 6(a), und bei rückwärtiger Anströmung, Fig. 6(b). Die Wölbung der Flügel 230 bedeutet, dass die Sehne der Flügel 230 nicht der direkten Verbindung der beiden Enden 232 und 234 entspricht sondern davon abweicht.

Zusätzlich verstärkt werden kann dieser Asymmetrie-Effekt, wenn wie in Fig. 7(a) bzw. (b) gezeigt die Oberkante des Vortex-Generators 200 mit einem oder mehreren Einschnitten zwischen mehreren Spitzen 240 versehen wird, durch die ein Strömungsausgleich jeweils vor dem leeseitigen Bereich erreicht wird. Hierbei wird der jeweils leeseitig liegende Geometriebereich durch die Zuführung ungestörter Strömung in seiner Wirkung unterstützt.

Diesen Effekt zeigt auch exemplarisch die untenstehende Tabelle zum Vergleich der asymmetrischen Wirkung der geometrischen Maßnahmen am Vortex-Generator 200. Hierbei ist für die exemplarisch gewählten Geometrien jeweils ein deutlicher Anstieg des Unterschieds in der Wirbelstärke, wie für die ViV-Unterdrückung durch eine Ring- oder HelixAnordnung erforderlich ist, erkennbar. Die Vortex-Generatoren 200 in der exemplarischen Auswertung sind hierbei in Größe zueinander passend gewählt.

| Vortex-Generator Form | Maximal Wirbelstärke (Vorticity X [1/s]) im Nachlauf bei nomineller Anströmung (0°) | Maximale Wirbelstärke (Vorticity X [1/s]) im Nachlauf bei umgekehrter Anströmung (180°) | Verhältnis der Wirbelstärke 0°/180° |
|---|---|---|---|
| Flacher Rechtecks-VG entsprechend Literatur | 58.1 | 55.1 | 1.05 |
| Flacher Dreiecks-VG entsprechend Literatur | 41.0 | 35.6 | 1.15 |
| Gewölbter VG 200 entsprechend Fig. 3(a) | 28.9 | 12.7 | 2.27 |
| Gewölbter VG mit 2 Spitzen | 39.9 | 14.6 | 2.72 |

Bei einer ringförmigen Anordnung beträgt der Abstand der Ringe zueinander zwischen 50% und 400% des Turmdurchmessers (0,5D bis 4D), wobei der besonders bevorzugte Bereich bei etwa 2D liegt.

Die Anzahl der Vortex-Generatoren 200 in einem Ring beträgt vorzugsweie sechs oder mehr, bevorzugt eine durch vier teilbare Anzahl und insbesondere acht. Die Ringe zueinander können verdreht oder gleich ausgerichtet sein.

Die Anzahl der Helixe, deren Steigung, sowie die Anzahl der Vortex-Generatoren 200 pro Abstufung sind einstellbar. Eine kombinierte Anordnung ergibt sich dabei als Spezialfall der Helix mit endlicher Ausdehnung von vorzugsweise zwei Vortex-Generatoren 200. Die Belegung der Fläche mit Vortex-Generatoren 200 kann durch die Strecke von oberstem bis unterstem Vortex-Generator 200 beschrieben werden, sowie über die mit Vortex-Generatoren 200 belegte Fläche.

Die Größe der Vortex-Generatoren 200 wird vorzugsweise relativ zum Durchmesser beschrieben werden (1%D bis 5%D, Sweetspot nach aktuellem Studienstand bei 2%).

Die Wölbung des Vortex-Generatoren 200 wird vorzugsweies relativ zur Größe der Vortex-Generatoren 200 festgelegt. Hierbei hat sich eine Wölbung von mindestens 1%, bezogen auf die Sehne der Flügel 230, als vorteilhaft herausgestellt. Besonders bevorzugt beträgt wie Wölbung mindestens 2% und insbesondere mindestens 3% der Sehne der Flügel 230.

Auch vorteilhaft hat sich eine Anzahl von Spitzen 240 größer eins herausgestellt.

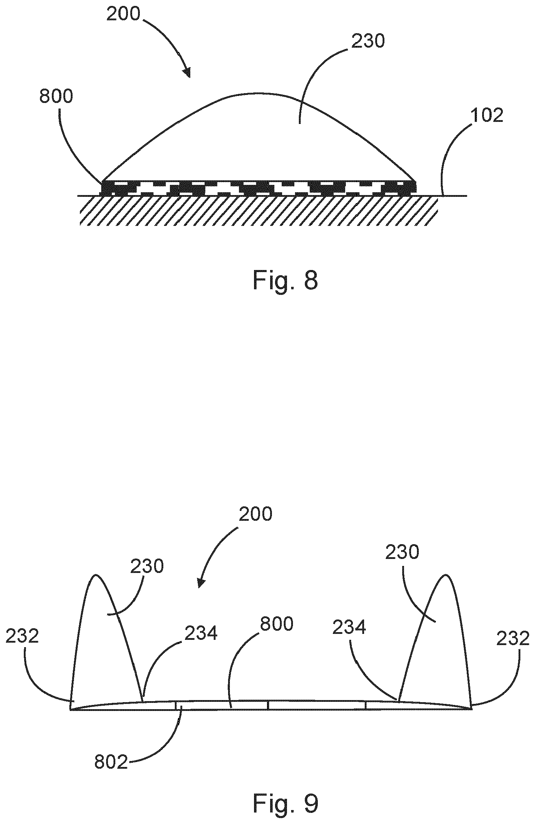

Fig. 8 zeigt einen Vortex-Generator 200 in Seitenansicht und Fig. 9 den Vortex-Generator 200 in einer Ansicht in Anströmungsrichtung. Der Vortex-Generator 200 hat in diesem Beispiel eine gemeinsame Basis 800, welche die beiden Flügel 230 verbindet und zur gemeinsamen Anordnung der beiden Flügel 230 an dem Turm 102 vorbereitet ist.

Zwischen dem Vortex-Generator 200 und dem Turm 102 kann beispielsweise doppelseitiges Klebeband mit Klebeschicht und/oder Schaumschicht angeordnet sein. Eine Vorderkante 802 der Basis 800 ist ebenfalls ein Hindernis für die Luftströmung und kann so in seiner Wirkung als "Unterflügel" bezeichnet werden, da die Vorderkante 802 ebenfalls zur Erzeugung von Wirbeln beiträgt.

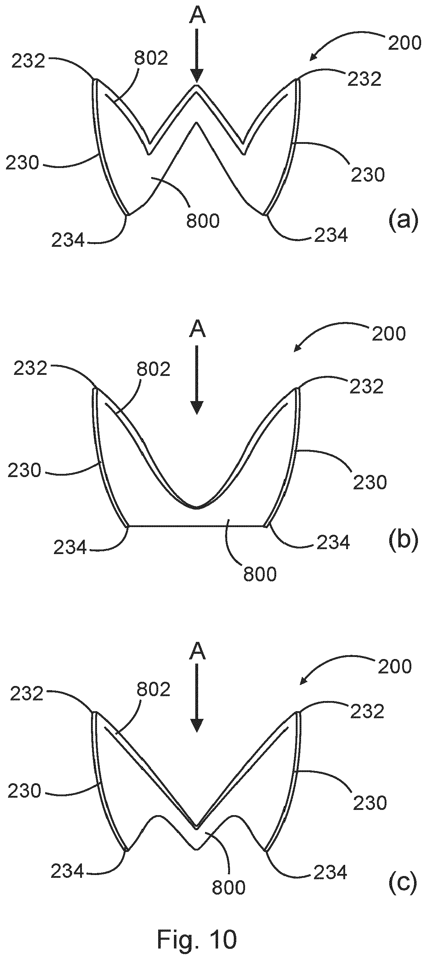

Fig. 10 zeigt Draufsichten auf unterschiedliche Geometrien von Basen 800, wobei in Fig. 10(a) eine Draufsicht auf eine W-förmige Basis 800 gezeigt ist, in Fig. 10(b) auf eine U-förmige Basis 800 und Fig. 10(c) auf eine V-förmige Basis 800. Es kann gesehen werden, dass die jeweils gebildeten Vorderkanten 802 nicht senkrecht auf der nominellen Anströmungsrichtung A stehen, sondern unter einem relativ großem Winkel dazu, ausgebildet sind. Alternativ zu den gezeigten "U", "V" und "W" förmigen Basen ist auch beispielsweise eine "H"-förmige Basis vorstellbar, die ähnlich der "U"-förmigen Basis ausgebildet ist, die Verbindung zwischen den beiden Flügeln aber nicht am hinteren Ende sondern in der Mitte aufweist.

Die Erfindung dient primär der Reduktion von wirbelerregten Querschwingungen (ViV) an Türmen von Windenergieanlagen. Diese sind sowohl während der Installation, als auch während Trudelzuständen dem Risiko einer Resonanz ausgesetzt, die durch die Erfindung reduziert bzw. verhindert werden kann. Tritt ein solcher Resonanzfall auf, kann es zu exzessiven Schwingungsamplituden kommen, die eine Gefahr für die am Aufbau oder Service beteiligten Mitarbeiter und die strukturelle Integrität der Anlage darstellen.

Die Erfindung lässt sich auf alle vom ViV-Phänomen betroffenen Strukturen und Zustände übertragen. Insbesondere sind hierbei Bauwerke wie Türme, Schornsteine, Brückenpfeiler, etc. und Installationen wie Antennen, Masten oder Spannseile zu nennen. Ebenso ist eine Übertragung in den Bereich der maritimen Anwendung wie Seekabel, Gründungen von Offshore-Windenergieanlagen, Gezeiten- und Wellenenergieanlagen oder maritime Plattformen möglich.

## Patentansprüche

1. Windenergieanlage (100) mit einem Turm (102), einer auf dem Turm (102) angeordneten Gondel (104), einem Generator und einem Rotor (106) mit mindestens einem Rotorblatt (108), wobei
die Windenergieanlage (100) Vortex-Generatoren (200) aufweist, die an einer Außenfläche des Turms (102) angeordnet sind, wobei
die Vortex-Generatoren (200) einen sich von der Außenfläche des Turms (102) erstreckenden Flügel (230) aufweisen, wobei
der Flügel (230) eine sich senkrecht von der Fläche des Turms (102) erstreckende Höhe und eine parallel zu der Fläche des Turms (102) erstreckende Sehne aufweist,
**dadurch gekennzeichnet, dass**
die Sehne eine Krümmung aufweist, derart, dass ein erstes Ende (232) der Sehne einen geringeren Winkel zur Horizontalen aufweist als das gegenüberliegende zweite Ende (234) der Sehne.

2. Windenergieanlage (100) nach Anspruch 1, wobei die Krümmung der Sehne über ihren ganzen Verlauf ungleich 0 ist.

3. Windenergieanlage (100) nach Anspruch 1 oder 2, wobei die Flügel (230) sich mit einem Winkel von mindestens 80°, vorzugsweise mindestens 85°, besonders bevorzugt von mindestens 88°, zu der Außenfläche des Turms (102) erstrecken.

4. Windenergieanlage (100) nach einem der vorstehenden Ansprüche, wobei die Flügel (230) jedes der Vortex-Generatoren (200) eine Höhe von zwischen 0,5% und 5%, vorzugsweise zwischen 1% und 2,5% und besonders bevorzugt von etwa 1,5%, des Durchmessers des Turms (102) an dem Ort des Vortex-Generators (200) aufweisen.

5. Windenergieanlage (100) nach einem der vorstehenden Ansprüche, wobei mehrere Vortex-Generatoren (200), vorzugsweise eine durch vier teilbare Zahl von Vortex-Generatoren (200) größer als sechs und insbesondere acht Vortex-Generatoren (200), ringförmig in einer Ebene um den Turm (102) angeordnet sind, wobei die Vortexgeneratoren in der Ebene vorzugsweise gleichmäßig voneinander beabstandet sind.

6. Windenergieanlage (100) nach einem der vorstehenden Ansprüche, wobei mehrere Vortex-Generatoren (200) helixförmig um den Turm (102) angeordnet ist.

7. Windenergieanlage (100) nach einem der vorstehenden Ansprüche, wobei mehrere Ebenen von Vortex-Generatoren (200) entlang der Höhenrichtung des Turms (102) angeordnet sind, wobei die mehreren Ebenen vorzugsweise voneinander einen Abstand in vertikaler Richtung aufweisen, der zwischen dem einfachen und dem dreifachen des Turmdurchmessers, insbesondere etwa dem zweifachen des Turmdurchmessers, beträgt.

8. Windenergieanlage (100) nach Anspruch 7, wobei wenigstens drei Ebenen von Vortex-Generatoren (200) entlang der Höhenrichtung des Turms (102) angeordnet sind, wobei der Abstand zwischen zwei der Ebenen geringer als zwischen den weiteren der Ebenen ist.

9. Windenergieanlage (100) nach einem der Ansprüche 7 oder 8, wobei die Krümmungen der Sehnen sämtlicher der Vortex-Generatoren (200) einer Ebene gleich orientiert sind.

10. Windenergieanlage (100) nach einem der Ansprüche 7 bis 9, wobei die Krümmungen der Sehnen wenigstens zwei benachbarter Ebenen, vorzugsweise sämtlicher der benachbarten Ebenen, entgegengesetzt orientiert sind.

11. Windenergieanlage (100) nach einem der vorstehenden Ansprüche, wobei die Sehne eine Krümmung aufweist, derart, dass der Vortex-Generator (200) eine Ablenkung der die Fläche des Turms (102) passierenden Strömung in Turmquerrichtung ermöglicht.

12. Windenergieanlage (100) nach einem der vorstehenden Ansprüche, wobei die Vortex-Generatoren (200) jeweils zwei Flügel (230) mit dazwischen angeordneter Basis (800) aufweisen.

13. Windenergieanlage (100) nach Anspruch 12, wobei die beiden Flügel (230) des Vortex-Generators (200) entgegengesetzte Krümmungen aufweisen, so dass Tangenten durch die ersten Enden (232) der zwei Flügel (230) sich nicht oder unter einem kleineren Winkel schneiden als Tangenten durch die gegenüberliegenden zweiten Enden (234) der zwei Flügel (230).

14. Windenergieanlage (100) nach einem der Ansprüche 12 oder 13, wobei die Vortex-Generatoren (230) derart an der Außenfläche des Turms (102) montiert sind, dass eine Mittellinie zwischen den beiden Flügeln (230) im Wesentlichen horizontal verläuft.

15. Windenergieanlage (100) nach einem der Ansprüche 12 bis 14, wobei eine vordere Hältfte entlang der Sehne einer lateralen Fläche der Flügel (230) ausgehend von dem ersten Ende (232) kleiner als eine hintere Hälfte der Fläche ist, dabei insbesondere mindestens 50% und besonders bevorzugt mindestens 75% der hinteren Sehnenhälfte der Fläche ist.

16. Windenergieanlage (100) nach einem der Ansprüche 12 bis 15, wobei die Basis (800) höchstens 90% der Fläche zwischen den Sehnen der Flügel (230) aufweist, wobei die Basis (800) insbesondere "U", "V", "W" oder "H"-förmig ausgebildet ist.

17. Windenergieanlage (100) nach einem der vorstehenden Ansprüche, wobei die Vortex-Generatoren (200) derart angeordnet sind, dass die Strömungsablenkung im Wesentlichen windrichtungsunabhängig erfolgt.

18. Vortex-Generator (200) mit einer gekrümmten Sehne zur Verwendung an einem Turm (102) einer Windenergieanlage (100) insbesondere nach einem der vorstehenden Ansprüche.

19. Verfahren zum Anordnen, insbesondere Nachrüsten von Vortex-Generatoren (200) nach Anspruch 18 an einer Windenergieanlage (100) nach einem der Ansprüche 1 bis 17.
